# EUROPEAN PATENT APPLICATION

(11) **EP 4 604 659 A1**
(43) Date of publication of application: **20.08.2025**
(21) Application number: 25157144.4
(22) Date of filing: 11.02.2025
(51) Int. Cl.: H04W 74/0816, H04W 84/12, H04W 74/04, H04W 84/00

(54) **LATENCY REDUCTION THROUGH CONTROLLER TRANSMIT OPPORTUNITY SHARING**

(30) Priority: 15.02.2024 IN 202421010608; 07.05.2024 IN 202421036114; 28.10.2024 US 202418929178
(71) Applicant: Avago Technologies International Sales Pte. Limited, Singapore 768923 (SG)
(72) Inventor: Adhikari, Shubhodeep, Irvine, 92618 (US); Verma, Sindhu, Irvine, 92618 (US); Fischer, Matthew J., Irvine, 92618 (US); Abdelaal, Rana, Irvine, 92618 (US); Agarwal, Peyush, Irvine, 92618 (US); Kondylis, George D., Irvine, 92618 (US); Singhal, Kamal Agarwal, Irvine, 92618 (US); Raveendranath Kamath, Manoj, Irvine, 92618 (US); Puducheri Sundaravaradhan, Srinath, Irvine, 92618 (US); Derham, Thomas Edward, Irvine, 92618 (US); Su, Hang, Irvine, 92618 (US)
(74) Representative: Dilg, Haeusler, Schindelmann Patentanwaltsgesellschaft mbH

(57) **Abstract**

Technical solutions include systems (300) and methods for transmission opportunity, TXOP, (310) sharing for latency sensitive traffic of non-TXOP holder devices within a TXOP. A first device (305) granted a TXOP can identify a first portion (314) of a TXOP for a transmission of the first device (305). The first device (305) can determine that a remaining portion (314) of the TXOP subsequent to the first portion (314) is available for data transmissions of other devices (305A). The first device (305) can transmit, to the other devices (305A), an indication of availability of the remaining portion (314) of the TXOP. The first device (305) can allocate, responsive to one or more responses to the indication, the remaining portion (314) of the TXOP to a second device (305A) of the one or more other devices (305A) to transmit data of the second device (305A) during the remaining portion (314) of the TXOP period (312).

## Description

### CROSS-REFERENCE TO RELATED PATENT APPLICATIONS

This application claims the benefit of and priority to an India Provisional Application No. 202421010608, filed February 15, 2024, and India Provisional Application No. 202421036114, filed May 7, 2024, both of which are incorporated herein by reference in their entirety.

### FIELD OF THE DISCLOSURE

This disclosure generally relates to systems and methods for improving the performance of latency-sensitive traffic through various TXOP sharing mechanisms where the latency-sensitive traffic is allowed to preempt or follow an ongoing frame exchange in a TXOP in a controlled manner.

### BACKGROUND

In wireless communications, time-based scheduling can be used to control transmissions between devices. For instance, a MAC layer feature used in IEEE 802.11-based wireless local area networks (WLANs) can be called a transmission opportunity (TXOP). The amount of time that a station has to send frames after gaining contention for the transmission medium can be defined by TXOP. Other devices on the WLAN may have low latency traffic for transmission.

### SUMMARY OF THE DISCLOSURE

The technical solutions provide systems and methods for transmission opportunity (TXOP) sharing for latency sensitive traffic of non-TXOP holder devices within a TXOP. In various wireless communications, such as for an example wireless local area network (WLAN), a wireless communication device that is granted a TXOP with a particular TXOP period during which the device can transmit their communications can be referred to as a TXOP holder device. During a TXOP granted to a TXOP holder device, non-TXOP devices (e.g., devices in the vicinity which do not hold the TXOP) may have latency sensitive traffic that is to be promptly transmitted, but may be pending for next opportunity. However, as the TXOP is granted to a specific TXOP holder device, it can be challenging for the non-TXOP devices to transmit their latency sensitive traffic during the same TXOP period. The technical solutions of the present disclosure allow for TXOP holder device to share portions of the TXOP period to non-TXOP devices, facilitating transmissions of latency sensitive traffic of the non-TXOP devices during the TXOP granted to the TXOP holder device.

At least one aspect of the technical solutions is directed to a system. The system can include a first device, such as a device of a wireless local area network (WLAN). The first device can be granted a transmission opportunity (TXOP) for transmissions during a TXOP period. The first device can be configured to identify a first portion of the TXOP period for one or more transmissions of the first device over the WLAN. The first device can be configured to determine that a remaining portion of the TXOP period subsequent to the first portion is available for data transmissions of one or more other devices of the WLAN. The first device can be configured to transmit, via the WLAN, to the one or more other devices, an indication of availability of the remaining portion of the TXOP period for data transmissions. The first device can be configured to allocate, responsive to one or more responses to the indication from the one or more other devices, the remaining portion of the TXOP period to a second device of the one or more other devices to transmit the data of the second device during the portion of the remaining portion of the TXOP period.

The first device can be configured to schedule a transmission of data of the first device during the first portion of the TXOP period. The first device can be configured to determine, responsive to a determination that the scheduled transmission occupying the first portion of the TXOP period is to be completed prior to a start of the remaining portion, that the remaining portion of the TXOP period is available for the one or more other devices to transmit low latency data during the remaining portion.

The first device can be configured to determine, based on a response of the one or more responses of the second device, that the data of the second device is low latency data. The first device can be configured to allocate, responsive to the data of the second device being low latency data, the remaining portion to the second device.

The first device can be configured to identify that a first data of the one or more transmissions of the first device is of a first priority. The first device can be configured to identify that a second data of a second one or more transmissions to be transmitted by the first device is of a second priority lower than the first priority. The first device can be configured to determine, responsive to the second data being of the second priority, to transmit the indication of availability.

The first device can be further configured to schedule, for the second device, a transmission of the data of the second device that is low latency data, for at least a first part of the remaining portion of the TXOP period. The first device can be further configured to schedule, for a third device of the one or more other devices of the WLAN, a transmission of a data of the third device that is low latency data for at least a second part of the remaining portion of the TXOP period, the second part following the first part.

The first device can be configured to transmit the indication to the one or more other devices via one or more physical protocol data units (PPDUs). The first device can be configured to receive, from the one or more other devices, one or more block acknowledgements (BAs) responsive to the one or more PPDUs. The one or more BAs can include the one or more responses indicated using one or more bits of one or more fields of the one or more BAs. The first device can be configured to select, based on the one or more bits of the one or more fields of the one or more BAs, the second device.

The first device can be configured to identify, for a plurality of the one or more other devices, a corresponding plurality of random delays within the TXOP period, each random delay of the plurality of random delays for each device of the one or more other devices different from each other random delay of the plurality of delays of each other device of the one or more other devices.

The first device can be configured to select, from the one or more other devices, the second device based on a respective random delay of the second device. The first device can be configured to allocate the remaining portion of the TXOP period to the second device in response to the selection. Each of the plurality of random delays can correspond to a timing for transmitting a respective response of the one or more responses by a respective device of the one or more other devices. The selection of the second device can be based on a respective timing of the random delay of the second device such that the response from the second device is received by the first device before other respective responses of other respective remaining devices.

The first device can be configured to determine that the second device has completed a transmission of the data of the second device during a first part of the remaining portion of the TXOP period. The first device can be configured to determine to transmit a second one or more transmissions of the first device over the WLAN during a second part of the remaining portion of the TXOP period. The second part can follow the first part. The first device can include a WLAN access point (AP) device and the second device can include a client device associated with the WLAN AP device.

The first device can include a client device of a WLAN access point (AP) device and the second device can include the WLAN AP device. The first device can be further configured to identify uplink data of the first device to transmit to the second device. The first device can be configured to determine, based on the uplink data, to allocate the remaining portion of the TXOP period to the second device for the second device to transmit downlink data to the first device.

The first device can be configured to determine to allocate the remaining portion of the TXOP period to the second device based on an amount of the uplink data satisfying a threshold.

The first device can include a first client device associated with a WLAN access point (AP) device and the second device can include a second client device associated with the WLAN AP device. The first device can be further configured to allocate the remaining portion of the TXOP period to the second device for peer to peer communications.

An aspect of the technical solutions relates to a method. The method can include identifying, by a first device of a wireless local area network (WLAN) granted a transmission opportunity (TXOP) for transmissions during a TXOP period, a first portion of the TXOP period for one or more transmissions of the first device over the WLAN. The method can include determining, by the first device, that a remaining portion of the TXOP period subsequent to the first portion is available for data transmissions of one or more other devices of the WLAN. The method can include transmitting, by the first device, via the WLAN, to the one or more other devices, an indication of availability of the remaining portion of the TXOP period for data transmissions. The method can include allocating, by the first device, responsive to one or more responses to the indication from the one or more other devices, the remaining portion of the TXOP period to a second device of the one or more other devices to transmit the data of the second device during the portion of the remaining portion of the TXOP period.

The method can include scheduling, by the first device, a transmission of data of the first device during the first portion of the TXOP period. The method can include determining, by the first device, responsive to a determination that the scheduled transmission occupying the first portion of the TXOP period is to be completed prior to a start of the remaining portion, that the remaining portion of the TXOP period is available for the one or more other devices to transmit low latency data during the remaining portion.

The method can include determining, by the first device, based on a response of the one or more responses of the second device, that the data of the second device is low latency data. The method can include allocating, by the first device, responsive to the data of the second device being low latency data, the remaining portion to the second device.

The method can include identifying, by the first device, that a first data of the one or more transmissions of the first device is of a first priority. The method can include identifying, by the first device, that a second data of a second one or more transmissions to be transmitted by the first device is of a second priority lower than the first priority. The method can include determining, by the first device, responsive to the second data being of the second priority, to transmit the indication of availability. The method can include scheduling, for the second device, a transmission of the data of the second device that is low latency data, for at least a first part of the remaining portion of the TXOP period.

An aspect of the technical solutions relates to a non-transitory computer readable medium. The non-transitory computer-readable medium can store instructions that, when executed by at least one processor of a first device a wireless local area network (WLAN) that is granted a transmission opportunity (TXOP) for transmissions during a TXOP period, can cause the at least one processor to identify a first portion of the TXOP period for one or more transmissions of the first device over the WLAN. The instructions, when executed by the at least one processor, can cause the at least one processor to determine that a remaining portion of the TXOP period subsequent to the first portion is available for data transmissions of one or more other devices of the WLAN. The instructions, when executed by the at least one processor, can cause the at least one processor to transmit, via the WLAN, to the one or more other devices, an indication of availability of the remaining portion of the TXOP period for data transmissions. The instructions, when executed by the at least one processor, can cause the at least one processor to allocate, responsive to one or more responses to the indication from the one or more other devices, the remaining portion of the TXOP period to a second device of the one or more other devices to transmit the data of the second device during the portion of the remaining portion of the TXOP period.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a diagram depicting an example communication environment with communication systems, according to one or more embodiments.
FIG. 2 is a schematic block diagram of a computing system, according to an embodiment.
FIG. 3 is an example of a system for providing a transmission opportunity (TXOP) sharing for latency sensitive traffic of non-TXOP holder devices.
FIG. 4 is an example in which an access point device, a TXOP holder device and a STA device are engaged in sharing of TXOP.
FIG. 5 is an example in which an AP, a TXOP holder device and a STA are engaged in sharing of TXOP.
FIG. 6 is an example method of providing a TXOP sharing for latency sensitive traffic of non-TXOP holder devices within a TXOP granted to a TXOP holder device.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

The following disclosure provides many different embodiments, or examples, for implementing different features of the provided subject matter. Specific examples of components and arrangements are described below to simplify the present disclosure. These are, of course, merely examples and are not intended to be limiting. For example, a first feature or a device in communication with or communicatively coupled to a second feature or a device in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein are related to one or more apparatuses, devices and/or systems, including a transmitter and/or receiver and one or more processors and that may be configured, constructed or implemented to communicate using any encoding process and techniques as defined or supported by any IEEE 801.11 standard such as 902.11n, 802.11AC, 802.11 ax and 802.11be or other versions and embodiments of the IEEE 802.11 standard.

TXOP (Transmission Opportunity) can refer to a time interval during which a device in a wireless network may be granted the right or ability to transmit data without contention (e.g., without competing with other devices for access to the network). TXOP can be gained through an Enhanced Distributed Channel Access [EDCA] mechanism. The technical solutions allow preemption of an ongoing frame exchange of a TXOP holder device (e.g., a device that is granted the TXOP) with low latency traffic of other (e.g., non-TXOP holding) devices on a wireless network, such as a WLAN, Bluetooth, Cellular Networks, Zigbee, Mesh Networking or others. The technical solutions can utilize a mechanism in a Wi-Fi system (e.g., 11bn) for a TXOP holder device (e.g., a Wi-Fi AP or a STA) to allow a STA that is associated with the TXOP holder and that is not granted the TXOP, to preempt the TXOP holder's frame exchange sequence in favor of a delivery of low latency traffic by the STA (e.g., the non-TXOP holder device). In such instances, the TXOP holder device can utilize one portion of the TXOP for its own transmissions, while allowing the non-TXOP holder to use the remaining (e.g., other) portions of the TXOP, for the transmissions by the non-TXOP holder STA. One or more policies may be set or determined for the TXOP holder to allow for such a preemption mechanism.

The technical solutions allow a preemption by the TXOP holder device through inserting a point coordination function (PCF) interframe space (PIFS) gap ahead of its preemptible transmission. In doing so, the technical solutions allow for low-latency traffic to be transmitted by the preempting device using a SIFS (Shortest Interface spacing) gap. Upon detecting this transmission after SIFS gap, the TXOP holder can aborts its intended transmission.

The technical solutions allow transmission of low latency traffic by a device within the TXOP acquired by, or granted to, another device (e.g., a TXOP holder). The technical solutions can consider various factors, such as whether the TXOP holder is an AP or a non-AP, whether the TXOP holder has more traffic (even of low priority) to send (or additionally in case of an AP, to schedule) in its current TXOP, whether the low latency transmission is to be allowed from only the TXOP responder(s) or even other device(s) in the basic service set (BSS).

Based on such considerations, embodiments of the technical solutions can utilize approaches that can be categorized into two categories, such as when the TXOP holder device is an AP, and when the TXOP holder device is not an AP (e.g., a STA). The technical solutions can be used to share medium access even across technologies such as UWB (Ultra-wide band) or high priority Bluetooth to preempt an ongoing transaction provided by the Wi-Fi TXOP. For Wi-Fi embodiments and standards, low latency traffic can be a target and the proposed solutions can achieve this target with minimal or minimized product complexity.

Advantages of the technical solution is to achieve low latency service by allowing TXOP sharing in a regulated manner so as to minimize collisions and also minimize product complexity. The technical solutions can be provided for dynamically allocated opportunities based on indicated requirements and can have the benefit or advantage of being compliant with applicable regional regulations, such as EU regulations.

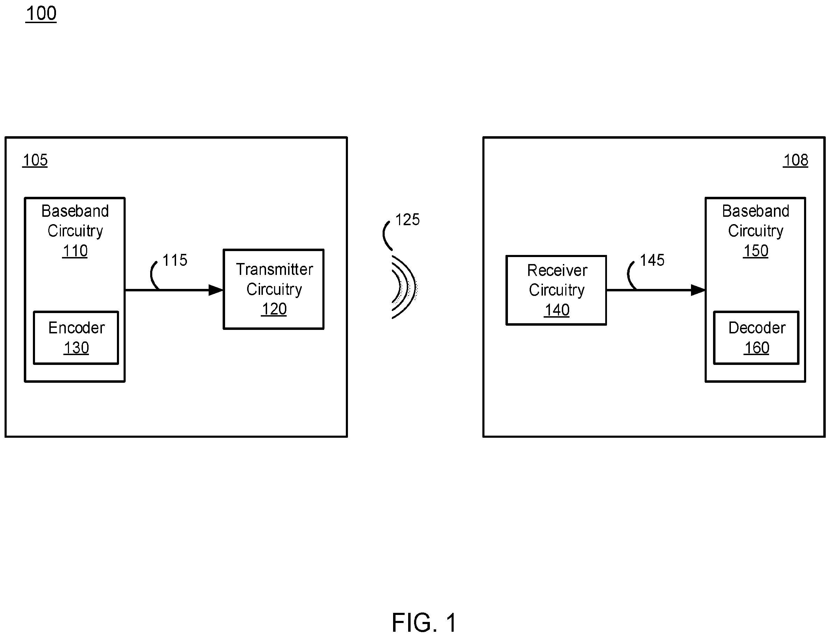

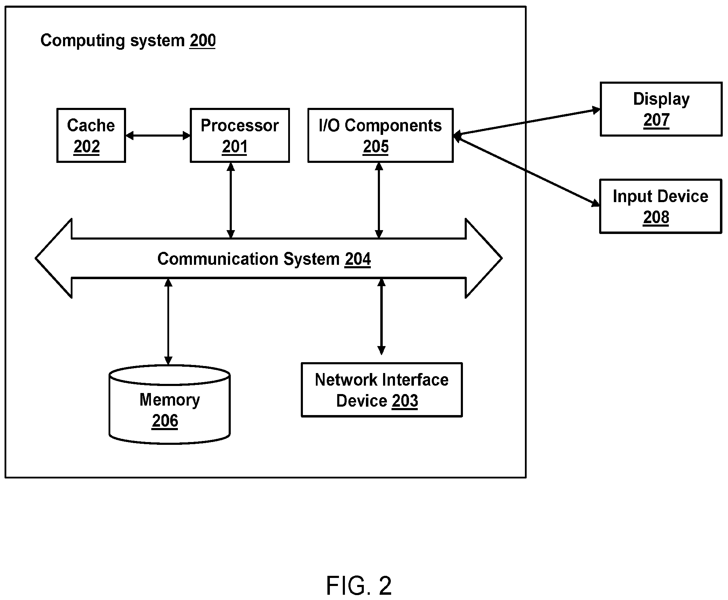

Referring to FIG. 1, illustrated is a diagram depicting an example communication environment 100 including communication systems (or communication apparatuses) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some embodiments, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some embodiments, each of the communication systems 105, 108 may have configuration similar to that of a computing system 200 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data and generates or outputs parity bits. In one aspect, the baseband circuitry 110 (or encoder 130) obtains a generator matrix or a parity check matrix or uses a previously produced generator matrix or a previously produced parity check matrix and encodes the information data by applying the information data to the generator matrix or the parity check matrix to obtain a codeword. In some embodiments, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix and appends the parity bits to the information bits to form a codeword. The baseband circuitry 110 generates the baseband data 115 including the codeword for the communication system 108 and provides the baseband data 115 to the transmitter circuitry 120.

The transmitter circuitry 120 of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna (not shown). In this configuration, the transmitter circuitry 120 up-converts the baseband data 115 from the baseband circuitry 110 onto a carrier signal to generate the wireless signal 125 at an RF frequency (e.g., 10 MHz to 60 GHz), and transmits the wireless signal 125 through the antenna.

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna (not shown). In this configuration, the receiver circuitry 140 receives the wireless signal 125 though an antenna, and down-converts the wireless signal 125 at an RF frequency according to a carrier signal to obtain the baseband data 145 from the wireless signal 125. The receiver circuitry 140 then provides the baseband data 145 to the baseband circuitry 150.

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some embodiments, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system 200, according to an embodiment. An illustrated example computing system 200, also referred to as a computer system 200, can include one or more processors 201 in direct or indirect communication, via a communication system 204 (e.g., bus), with memory 206, at least one network interface controller 203 with network interface port for connection to a network (not shown), and other components, e.g., input/output ("I/O") components 205. Generally, the processor(s) 201 can execute instructions (e.g., computer code or programs) received from memory (e.g., 206 or 202). The processor(s) 201 illustrated can incorporate, or are connected to, cache memory 202. In some instances, instructions are read from memory 206 into cache memory 202 and executed by the processor(s) 201 from cache memory 202. The computing system 200 may not necessarily contain all of these components shown in FIG. 2 and may contain other components that are not shown in FIG. 2.

In more detail, the processor(s) 201 may be any logic circuitry that processes instructions, e.g., instructions fetched from the memory 206 or cache 202. In many implementations, the processor(s) 201 are microprocessor units or special purpose processors. The computing device 205 may be based on any processor, or set of processors, capable of operating as described herein. The processor(s) 201 may be single core or multi-core processor(s). The processor(s) 201 may be multiple distinct processors.

The memory 206 may be any device suitable for storing computer readable data. The memory 206 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray^{®} discs). A computing system 200 may have any number of memory devices 206.

The cache memory 202 is generally a form of computer memory placed in close proximity to the processor(s) 201 for fast read times. In some implementations, the cache memory 202 is part of, or on the same chip as, the processor(s) 201. In some implementations, there are multiple levels of cache 202, e.g., L2 and L3 cache layers.

The network interface controller 203 manages data exchanges via the network interface (sometimes referred to as network interface ports). The network interface controller 203 handles the physical and data link layers of the OSI model for network communication. In some implementations, some of the network interface controller's tasks are handled by one or more of the processor(s) 201. In some implementations, the network interface controller 203 is part of a processor 201. In some implementations, the computing system 200 has multiple network interfaces 203 controlled by a single controller. In some implementations, the computing system 200 has multiple network interface controllers 203. In some implementations, each network interface is a connection point for a physical network link (e.g., a cat-5 Ethernet link). In some implementations, the network interface controller 203 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 203 implements one or more network protocols such as Ethernet. Generally, a computing device 205 exchanges data with other computing devices via physical or wireless links through a network interface. The network interface may link directly to another device or to another device via an intermediary device, e.g., a network device such as a hub, a bridge, a switch, or a router, connecting the computing device 200 to a data network such as the Internet.

The computing system 200 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 200 may include an interface (e.g., a universal serial bus (USB) interface) for connecting input devices, output devices, or additional memory devices (e.g., portable flash drive or external media drive). In some implementations, a computing device 200 includes an additional device such as a co-processor, e.g., a math co-processor can assist the processor 201 with high precision or complex calculations.

The components 209 may be configured to connect with external media, a display 207, an input device 208 or any other components in the computing system 200, or combinations thereof. The display 207 may be a liquid crystal display (LCD), an organic light emitting diode (OLED) display, a flat panel display, a solid state display, a cathode ray tube (CRT) display, a projector, a printer or other now known or later developed display device for outputting determined information. The display 207 may act as an interface for the user to see the functioning of the processor(s) 201, or specifically as an interface with the software stored in the memory 206.

The input device 208 may be configured to allow a user to interact with any of the components of the computing system 200. The input device 208 may be a plurality pad, a keyboard, a cursor control device, such as a mouse, or a joystick. Also, the input device 208 may be a remote control, touchscreen display (which may be a combination of the display 207 and the input device 208), or any other device operative to interact with the computing system 200, such as any device operative to act as an interface between a user and the computing system 200.

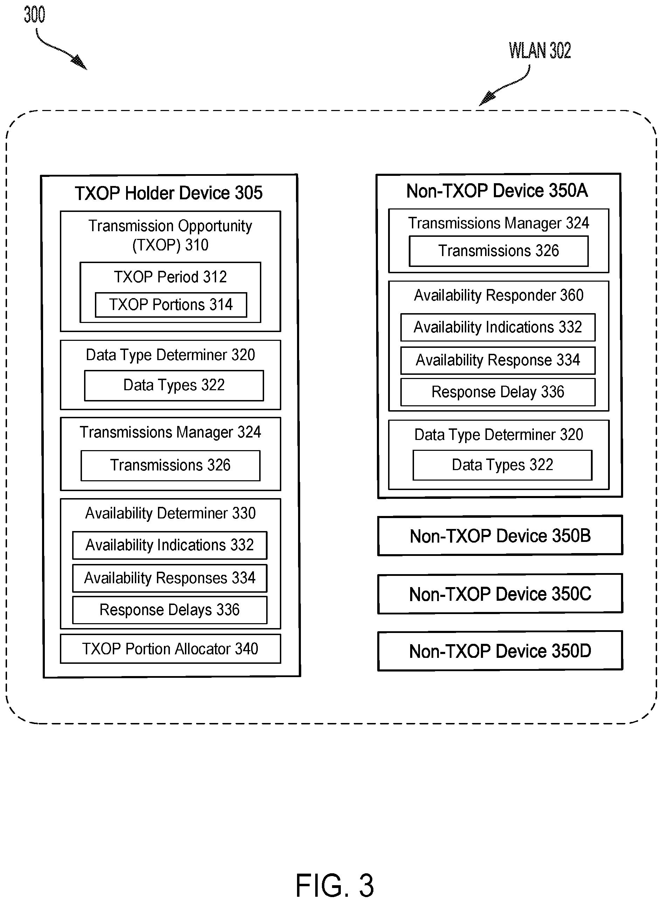

FIG. 3 illustrates an example system 300 for providing a transmission opportunity (TXOP) sharing for latency sensitive traffic of non-TXOP holder devices. System 300 can incorporate, utilize or be implemented using any combination of features of a communication environment 100 of FIG. 1 or a computing system 200 of FIG. 2. System 300 can include a TXOP holder device 305 and one or more non-TXOP devices 350 (e.g., devices 350A, 350B, 350C or 350D) that can communicate with each other via a wireless network, such as a wireless local area network (WLAN) 302, or any other wireless network or technology, such as for example, Bluetooth, Zigbee, cellular network or a Mesh network. TXOP holder device 305 can include one or more of transmission opportunities (TXOPs) 310, that can include one or more of transmission opportunity (TXOP) periods 312. Each TXOP period 312 can include any number (e.g., plurality) of transmission opportunity (TXOP) portions 314. A TXOP portion 314 can include a time duration, subsection or a portion of time within the TXOP 310, during which one or more transmissions (e.g., by the TXOP holder device 305 or by one or more other non-TXOP devices 350) can be implemented (e.g., transmitted across the WLAN).

TXOP holder device 305 can include one or more data type determiners 320 for determining various data types 322 that can be transmitted. TXOP holder device 305 can include one or more transmission managers 324 for managing or implementing various transmissions 326. TXOP holder device 305 can include one or more TXOP portion allocators 340 for allocating various TXOP portions 314 to different WLAN devices (e.g., TXOP holder device 305 or any of non-TXOP devices 350 (e.g., 350A-D). TXOP holder device 305 can include one or more availability determiners 330 for generating, processing or providing availability indications 332 and receiving or processing availability responses 334 from various non-TXOP devices 350 along with, or according to, any response delays 336 of such availability responses 334.

The non-TXOP devices 350 (e.g., 350A-D) can each include one or more transmission managers 324 for managing the transmissions 326 of the non-TXOP device 350, and one or more data type determiners 320 for determining the data types 322 of the non-TXOP device 350. The non-TXOP devices 350 can include one or more availability responders 360 that can receive one or more availability indications 332 (e.g., from the TXOP holder device 305) and generate (e.g., responsive to such availability indications 332) one or more availability responses 334, along with response delays 336 for such availability responses 334 of the non-TXOP devices 350. Depending on dynamic changing or granting of TXOP 310, which can be granted or assigned to any of the devices, the TXOP holder 305 can turn into non-TXOP device 350 and vice versa, depending on the implementation.

A TXOP holder device 305 can be device of WLAN 302 that is granted a transmission opportunity (TXOP) 310 to use for transmissions (e.g., transmissions from the TXOP holder device 305) during a TXOP period 312 of the TXOP 310. The TXOP holder device 305 can include a WLAN access point (AP) device, or a client device (e.g., a STA) associated with the WLAN AP device. The TXOP 310 can be granted to the TXOP holder device 305 by a WLAN access point (AP) or by another TXOP holder device 305 (e.g., station). The TXOP holder device 305 can identify a first TXOP portion 314 of the TXOP period 312 for one or more transmissions of the TXOP holder device 305 over the WLAN 302. The first TXOP portion 314 of the TXOP can be an initial portion of the TXOP 310 during which the TXOP holder device 305 can transmit the network traffic of the TXOP holder device 305. The TXOP holder device 305 can utilize the availability determiner 330 to identify, detect or determine that a remaining TXOP portion 314 of the TXOP period 312, that is subsequent to the first TXOP portion 314, is available for data transmissions of one or more other (e.g., non-TXOP) devices 350 of the WLAN 302.

The TXOP holder device 305 can include a client device (e.g., a STA) of a WLAN access point (AP) device and the non-TXOP device 350 can include a WLAN AP device. The TXOP holder device 305 can identify uplink data of the first device (e.g., 305) to transmit to the second device (e.g., 350). The TXOP holder device 305 can determine, based on the uplink data, to allocate the remaining portion of the TXOP period 312 (e.g., the remaining TXOP portion 314) to the second device (e.g., 350) for the second device to transmit downlink data to the first device (e.g., 305). The remaining TXOP portion 314 can include any portion of the TXOP 310 granted to the TXOP holder device 305, during which the non-TXOP devices 350 can transmit their network traffic, following the first TXOP portion 314. The first device (e.g., 305) can be configured to determine to allocate the remaining portion of the TXOP period 312 to the second device (e.g., 350) based on an amount of the uplink data satisfying a threshold. For instance, the threshold can include an amount of uplink data that is satisfied (e.g., exceeded) by the uplink data. The TXOP holder device 305 can include a first client device associated with a WLAN access point (AP) device and the second device can include a second client device associated with the WLAN AP device, where the first device can allocate the remaining portion (e.g., 314) of the TXOP period 312 to the second device for peer to peer communications.

The TXOP holder device 305 can utilize the availability determiner 330 to generate and transmit, via the WLAN 302, to the one or more other (e.g., non-TXOP) devices 350, an indication of availability (e.g., the availability indication 332). The indication of availability (e.g., 332) can include any indication, message or transmission that can indicate to the non-TXOP devices 350 availability of the remaining TXOP portion 314 of the TXOP 310 for transmissions of the non-TXOP devices 350. For instance, in response to determining that low latency transmissions are completed, or about to be completed, the TXOP holder device 305 can determine to generate availability indication 332 to the non-TXOP devices 350 on the WLAN 302 to check if any of the non-TXOP devices 350 have low-latency transmissions to transmit via the WLAN 302, during a remaining TXOP portion 314 of the TXOP 310.

The TXOP holder device 305 can receive, in response to the availability indication 332 transmitted by the TXOP holder device 305 to the one or more other devices, one or more availability responses 334 to the availability indication 332. The TXOP holder device 305 can utilize a TXOP portion allocator 340 to determine, select or allocate, responsive to the received one or more availability responses 334, the remaining portion (e.g., 314) of the TXOP period 312 to a second device (e.g., a non-TXOP device 350) of the one or more other (e.g., non-TXOP) devices. The second device can use the remaining TXOP portion 314 to transmit the data of the second device during at least a part of the remaining portion of the TXOP period 312.

Wireless local area network (WLAN) 302 can include any network allowing devices (e.g., 305 or 350) to connect and communicate wirelessly within a limited area, using for example Wi-Fi technology. WLAN 302 can include any implementation of a Wireless Local Area Network that allows communication between multiple network devices within a localized area, such as a home, office, or campus. WLAN 302 can facilitate the exchange of data among devices, including TXOP holder device 305 and non-TXOP devices 350, by using wireless transmission methods, such as those conforming to standards including IEEE 802.11. WLAN 302 can allow these devices to connect and share transmission opportunities (TXOPs) and manage data transmissions through a structured and controlled environment. WLAN 302 can support various types of data communication, including voice, video, and best-effort traffic, depending on the needs and configurations of the communicating devices. The wireless nature of WLAN 302 can provide flexibility and mobility to the devices, allowing such devices (e.g., 305 or 350) to communicate without the constraints of physical cables.

Transmission opportunity (TXOP) holder device 305 can include any combination of hardware and software (e.g., a network device) that has acquired, or has been granted, a TXOP 310 to control or transmit data over a network during a specified TXOP period. The TXOP holder device 305 can include any device configured for communication via a wireless local area network (WLAN) 302 that has gained control over transmission opportunities (TXOPs). The TXOP holder device 305 can be responsible for managing and allocating TXOP periods 312 to itself or other devices within the WLAN 302. The TXOP holder device 305 can facilitate or orchestrate communications and allow for efficient use of the available TXOP periods 312. For instance, a TXOP holder device 305 can include a Wi-Fi access point (AP) device or a client (e.g., smartphone, tablet or a computer) wireless communication device that can acquire a TXOP 310 for managing network traffic over one or more TXOP periods 312 or over one or more TXOP portions 314 of a TXOP period 312.

Non-TXOP device 350 can include any device within a WLAN 302 that does not currently hold a TXOP 310 but can receive transmissions and respond to availability indications 332 for possible low-latency transmissions during the TXOP period 312. The non-TXOP devices 350 (e.g., devices 350A, 350B, 350C, or 350D) can include devices within the WLAN 302 that do not initially hold the TXOP 310. The non-TXOP devices 350 can communicate with the TXOP holder device 305 and with each other. The non-TXOP devices 350 can rely on the TXOP holder device 305 to allocate portions of the TXOP period 312 (e.g., one or more TXOP portions 314) to be used for transmissions by the non-TXOP devices 350. Non-TXOP devices 350 can include various client devices such as smartphones, laptops, or loT devices that can participate in network communications under the coordination of the TXOP holder device 305.

Transmission opportunity (TXOP) 310 can represent one or more specific time intervals during which the TXOP holder device 305 can transmit data over the WLAN 302. The TXOP 310 can be used for ordering communications to avoid communication collisions and managing network traffic. TXOP 310 can allow the TXOP holder to control the flow of information within the specified time intervals. TXOPs 310 can allow the TXOP holder device 305 to have the exclusive access to the wireless medium, reducing collisions and optimizing network performance, as well as allowing other non-TXOP devices 350, to transmit data.

Transmission opportunity (TXOP) periods 312 can include any time-interval subdivisions within the TXOP 310. TXOP periods 312 can provide one or more TXOP 310 subdivisions during which a particular network device (e.g., TXOP holder device 305 or non-TXOP device 350) can transmit or receive data. Each TXOP period 312 can include a defined time slot that can be further divided into multiple portions (e.g., TXOP portions 314) that can be used or dedicated for different types of transmissions. TXOP periods 312 can be utilized for synchronizing or timing of data transmissions within the WLAN 302, allowing that each device has sufficient time to send its data.

Transmission opportunity (TXOP) portions 314 can include any portions or segments within a TXOP period 312. TXOP portions 314 can be allocated by the TXOP holder device 305 for specific transmissions, such as transmissions of a particular data type 322 or transmissions by a particular device (e.g., 305 or 350). TXOP portions 314 allow for partial or granular allocation of sections of TXOP period 312 to different devices or types of data (e.g., low latency transmissions or high priority transmissions), allowing for improved or optimized use of available bandwidth. For example, a TXOP portion 314 can be allocated for video data transmission, while another portion can be reserved for voice or best-effort traffic.

Data type determiner 320 can include any combination of hardware or software within a device (e.g., TXOP holder device 305 or the non-TXOP device 350) that can identify and categorize the types of data. Data type determiner 320 can include the functionality to detect, identify or detect any types of data to be transmitted over the WLAN 302. Data type determiner 320 can identify or distinguish low latency data from other data that can tolerate longer delays. Data type determiner 320 can assess the nature of the data-such as video, voice, or best-effort traffic-and help prioritize transmissions based on data type. Such categorization can be utilized to facilitate that latency-sensitive data, such as video data, is transmitted promptly, while other data (e.g., audio) can be transmitted with some higher delay.

Data types 322 can include any type and form of data that can be transmitted over WLAN 302. Data types 322 can include different categories of data that can be transmitted by the TXOP holder device 305 or the non-TXOP devices 350. Data types 322 can include different priority levels of data, such as high priority data (e.g., augmented reality data, control signals, gaming data or video streaming) and low priority data (e.g., internet of things routine updates, background sync of collaborative work data) that can tolerate higher threshold delays. Data types 322 can include video (VI), voice (VO), best-effort (BE) traffic, gaming data, sensor data, control signals, financial transactions, emergency notifications, virtual reality or augmented reality data, IoT data, or collaborative work data. Data types 322 can include high priority or low latency data of various types (e.g., control signals, gaming data, video streaming).

Transmissions manager 324 can include any combination of hardware and software for managing the execution of transmissions 326 by either TXOP holder device 305 or the non-TXOP devices 350. Transmissions manager 324 can oversee the scheduling, initiation, and completion of data transmissions, such as transmission of low latency data, high latency data or any transmissions communicated via WLAN 302. Transmissions manager 324 can include the functionality to allow each device to transmit its data efficiently within its allocated TXOP portion. For example, a transmission manager 324 can schedule a video data transmission during a high-priority TXOP portion while deferring less critical data transmissions to later transmissions.

The transmissions manager 324 can schedule a transmission 326 of data of the first device during the first portion of the TXOP period 312 (e.g., a first TXOP portion 314). The first portion of the TXOP period 312 (e.g., a first TXOP portion 314) can be assigned by the transmissions manager 324 to a non-TXOP device 350, to be taken back or reclaimed by the TXOP holder device 305 during a second portion 314 that follows the first portion. For instance, a TXOP holder can determine that the data to be transmitted by the TXOP holder is old, should be refreshed or can be updated and may therefore take more time before the TXOP holder 305 is ready to transmit its own data. In response to such a determination, the TXOP holder 305 can assign, grant or schedule for a second device a first TXOP portion 314 and schedule a second TXOP portion 314 following the first TXOP portion 314 for the TXOP holder 305 once the updated or refreshed data has arrived and is ready for transmission.

The first device (e.g., TXOP holder device 305) can be configured to schedule, for a second device (e.g., non-TXOP device 350), a transmission 326 of the data of the second device that is low latency data, for at least a first part of the remaining portion of the TXOP period. For instance, the first device (e.g., TXOP holder device 305) can be configured to schedule, for a third device (e.g., another non-TXOP device 350) of the one or more other devices of the WLAN 302, a transmission 326 of a data of the third device that is low latency data for at least a second part (e.g., 314) of the remaining portion of the TXOP period 312. The second part (e.g., the second TXOP portion 314) of the TXOP period 312 can follow the first part of the TXOP period (e.g., the first TXOP portion 314).

Transmissions 326 can include any act of transmitting or sending data over the WLAN 302 by either the TXOP holder device 305 or the non-TXOP devices 350. Transmissions 326 can occur during allocated TXOP portions 314 of a TXOP period 312. Transmissions 326 can be managed by the transmission managers 324. Transmissions 326 can vary in nature depending on the data types 322, with each type utilizing specific handling for efficient and timely delivery.

Availability determiner 330 can include any combination of hardware and software for a TXOP holder device 305 to determine, detect or identify availability for non-TXOP devices 350 to utilize one or more TXOP portions 314 for transmissions of their communications (e.g., low latency or high priority communications). Availability determiner 330 can identify or detect TXOP portions 314 within a TXOP period 312 to provide to non-TXOP devices 350 for transmissions of their network traffic (e.g., low latency or high priority transmissions).

Availability determiner 330 can generate, process or provide availability indications 332 to the non-TXOP devices 350. Availability determiner 330 can handle the reception and processing of availability responses 334 (e.g., generated by non-TXOP devices 350 responsive to the availability indications 332). Availability determiner 330 can take into account any response delays 336. The availability determiner 330 plays a key role in coordinating the use of the remaining TXOP period by assessing which devices are ready to transmit and how much time is available.

Availability determiner 330 can determine that a remaining portion (e.g., upcoming TXOP portion 314) of the TXOP period 312 is available for the one or more other (e.g., non-TXOP) devices 350 to transmit low latency data during the remaining portion. For instance, the availability determiner 330 can determine that the remaining TXOP portion 314 is available for transmissions 326 by one or more non-TXOP devices 350 responsive to a determination that the scheduled transmission 326 occupying the first portion of the TXOP period 312 is to be completed prior to a start of the remaining portion (e.g., 314).

Availability determiner 330 can determine, based on a response of the one or more availability responses 334 of the second device (e.g., non-TXOP device 350), the data type 322 of the transmission 326. For instance, the availability determiner 330 can determiner, based on an availability response 334, that the data of the second device is high priority data or low latency data. The availability determiner 330 can identify that a first data of the one or more transmissions of the first device is of a first priority. The availability determiner 330 can identify that a second data of a second one or more transmissions to be transmitted by the first device is of a second priority lower than the first priority and determine, responsive to the second data being of the second priority, to transmit the availability indication 332.

Availability determiner 330 can transmit the availability indication 332 to the one or more other (e.g., non-TXOP) devices 350 via one or more physical protocol data units (PPDUs). The availability determiner 330 can receive, from the one or more other devices (e.g., non-TXOP devices 350), one or more block acknowledgements (BAs) responsive to the one or more PPDUs. The one or more BAs can include the one or more responses (e.g., availability responses 334) that can be indicated using one or more bits of one or more fields of the one or more BAs. For instance, a non-TXOP device 350 can indicate that it has transmissions 326 of low latency type to transmit in the TXOP portions 314 made available by the TXOP holder device 305 using bits in the fields of the BA. The availability determiner 330 can select, based on the one or more bits of the one or more fields of the one or more BAs, the second device (e.g., non-TXOP device 350) for transmissions during the remaining TXOP portion 314.

Availability determiner 330 can identify, for a plurality of the one or more other (e.g., non-TXOP) devices 350, a corresponding plurality of random response delays 336 within the TXOP period 312. Each random response delay 336 of the plurality of random delays for each device of the one or more other (e.g., non-TXOP) devices 350 can be different from each other random response delay 336 of the plurality of delays of each other non-TXOP device 350 of the one or more other devices. The random response delays 336 can each identify the non-TXOP device 350 associated with the given response delay 336.

The availability determiner 330 can select, from the one or more other devices (e.g., 350), the second device (e.g., a non-TXOP device 350 to use for transmissions 326 via TXOP portions 314) based on a respective random delay (e.g., response delay 336) of the second device. For instance, the availability determiner 330 of the TXOP holder device 305 can select from a plurality of non-TXOP devices 350, a particular non-TXOP device 350 to grant TXOP portion 314 for transmissions. This selection can be made based on the response delay 336 of the particular non-TXOP device 350. For instance, the availability determiner 330 can select a particular non-TXOP device 350 based on response delay 336 of this non-TXOP device 350 being the shortest response delay 336 of the plurality of response delays 336 for which the availability response 334 indicated that low latency data is to be transmitted. The TXOP portion allocator 340 can then, responsive to the selection by the availability determiner 330, allocate the remaining portion of the TXOP period 312 to the second device (e.g., the selected non-TXOP device 350) in response to the selection.

Each of the plurality of random delays 336 (e.g., of each of the plurality of availability responses 334) can correspond to a timing for transmitting a respective availability response 334 of the one or more responses by a respective non-TXOP device 350 of the one or more other non-TXOP devices 350. The selection of the second device (e.g., non-TXOP device 350 to utilize the remainder of the TXOP portions 314) can be based on a respective timing of the random response delay 336 (e.g., of the availability response 334) of the second device such that the availability response 334 from the second device is received by the first device (e.g., TXOP holder device 305) before other respective responses of other respective remaining devices.

The availability determiner 330 can determine that the second device (e.g., non-TXOP device 350 to be selected for transmissions via TXOP portions 314) has completed a transmission 326 of the data of the second device during a first part of the remaining portion of the TXOP period 312. The availability determiner 330 can determine to transmit a second one or more transmissions of the first device over the WLAN 302 during a second part of the remaining portion of the TXOP period 312. The second part of the remaining portion TXOP period 312 can follow the first part.

Availability indications 332 can include any signals or messages sent by the TXOP holder device 305 to inform the non-TXOP devices 350 that a remaining TXOP portion 314 of the TXOP period 312 is available for transmissions by non-TXOP devices 350. Availability indication 332 can be transmitted by the TXOP holder device 305 to indicate to the non-TXOP devices 350 that low latency transmissions by the non-TXOP devices 350 can be transmitted during one or more upcoming TXOP portions 314. Availability indication 332 can be used for coordinating the transmissions by non-TXOP devices 350 during a remaining TXOP period (e.g., TXOP portion 314 that remains available for non-TXOP device 350 transmissions within the TXOP 310). Availability indication 332 transmitted by a TXOP holder device 305 can allow non-TXOP devices 350 to respond and potentially gain access (e.g., the remaining TXOP portion 314) for their wireless transmissions.

Availability responses 334 can include any responses or replies by the non-TXOP devices 350, responsive to receiving availability indications 332 from the TXOP holder device 305. Availability responses 334 can indicate whether the non-TXOP devices are ready to use the remaining TXOP period for low latency transmissions. Availability responses 334 can be generated according to particular device-specific delays (e.g., response delays 336) to avoid collisions with other responding devices. The TXOP holder device 305 can use availability responses 334 from the non-TXOP devices 350 to determine or decide how to allocate the remaining TXOP period (e.g., TXOP portion 314) effectively to other non-TXOP devices 350.

Response delays 336 can include any timing delays associated with the availability responses 334 sent by the non-TXOP devices 350. Each non-TXOP device 350 can have a unique response delay 336 for transmitting its availability responses 334 to availability indications 332 of the TXOP holder device 305. The response delays 336 can correspond to a unique time duration between the availability indication 332 transmission or a receipt and a time of transmitting the availability response 334 of the non-TXOP device 350. For instance, a first non-TXOP device 350 can have a first response delay 336 for sending its first availability response 334 to an availability indication 332 of a TXOP holder device 305. For instance, a second non-TXOP device 350 can have a second response delay 336 (e.g., different than the first response delay 336 of the first non-TXOP device 350) for sending its second availability response 334 to the same availability indication 332. Based on the differences in time durations of the two response delays 336, one of the availability responses 334 can be transmitted before the second, avoiding collisions and also providing a prioritization of some of the non-TXOP devices 350 over others. Response delays 336 can impact how quickly the TXOP holder device 305 receives and processes the availability responses, which in turn can affect the scheduling of transmissions within the remaining TXOP period 312. Availability determiner 330 can manage the response delays 336 to facilitate allocating the remaining transmission time (e.g., assigning TXOP portions 314 to particular non-TXOP devices 350).

TXOP portion allocator 340 can include any combination of hardware and software for distributing the TXOP portions 314 among various WLAN devices, including both the TXOP holder device itself and any non-TXOP devices 350 (e.g., 350A-D). TXOP portion allocator 340 can facilitate that each device receives an appropriate share of the TXOP period based on factors such as data type, priority, and device capabilities. TXOP portion allocator 340 can include the functionality to determine identify the non-TXOP devices 350 that has data for transmissions that is of highest priority (e.g., low latency data), thereby prioritizing those non-TXOP device transmissions that are of higher priority than others. The TXOP portion allocator 340 can allocate, responsive to the data of the second device (e.g., non-TXOP device 350) being low latency data, the remaining TXOP portion 314 to the second device (e.g., for transmissions during the one or more TXOP portions 314).

Availability responder 360 can include any combination of hardware and software within the non-TXOP devices 350 that can receive availability indications 332 (e.g., from the TXOP holder device 305) and generate availability responses 334. Availability responder 360 can generate the availability response 334 for a non-TXOP device 350 based on a response delay 336 that is unique to that non-TXOP device 350. Availability responders 360 of multiple non-TXOP devices 350 can generate unique response delays 336 for the availability responses 334, allowing each of the availability response 334 to be transmitted at a unique delay window from the availability indication 332. Availability responder 360 can indicate whether the non-TXOP devices are prepared to use the remaining portion of the TXOP period 312 (e.g., TXOP portion 314) for transmissions (e.g., low latency transmissions).

The technical solutions can be directed to enhancing the performance of latency-sensitive traffic through various TXOP sharing mechanisms in which the latency-sensitive traffic is allowed to preempt or follow an ongoing frame exchange in a TXOP in a controlled manner. The TXOP holder devices can be Wi-Fi AP devices or non-AP devices (e.g., STAs). The TXOP holder can have traffic to send, including of higher or lower priority than that of non-TXOP devices. The low latency transmissions can be allowed from the TXOP responders or from other devices in the BSS.

When an AP is the TXOP holder device 305 and the AP has no more data to send or schedule in its TXOP 310 and wants to share the remaining portion of the TXOP 312, the TXOP holder can utilize one or more solutions to share portions of the TXOP with non-TXOP devices. For instance, the device can utilize TXOP sharing (TXS) modes 1 and 2 defined in 11be. These schemes however can have the restriction that the AP can share its TXOP with only 1 client. Such sharing can be based on information received from the client regarding possible UL or P2P transmissions, but without any accurate estimate of the amount of traffic. This may not allow the AP to share the remainder of the TXOP in a non-dedicated manner (i.e. when the identity of the potential transmitter of the low latency (LL) traffic is not known at the AP).

The AP can schedule an LL traffic indication and subsequently schedule LL traffic based on response(s) to the LL traffic indication. For TXOP responder(s), LL traffic indication can be implemented by overloading reserved bits in the BA or by using the QoS control or buffer status report (BSR) control subfields in the same PPDU as BA. For non-TXOP responders, a scheme similar to uplink orthogonal random access (UORA) can be used, where the AP indicates a latency-sensitive group AID allowing all clients with latency sensitive TIDs to compete and based on a probability, win access to the UORA resources and indicate only the presence of LL traffic. Following such indication of LL traffic from its clients, the AP can trigger the clients with LL traffic in a dedicated manner.

As an optimization, the clients may use orthogonal codes (which may be defined) to transmit their respective LL traffic indications on the same resource. The AP (e.g., TXOP holder) can schedules LL traffic directly. For instance, the AP can a scheme similar to UORA, in which the AP indicates a latency-sensitive group AID allowing all clients with latency sensitive TIDs to compete randomly and transmit such traffic in the remainder of the TXOP. Such transmission of LL traffic by the clients can be single user (SU) or multi-user (MU), or resource unit (RU) resolution without any dedicated scheduling by the AP.

The SU option can have the advantage that it allows the AP to take back ownership of the TXOP (by PIFS based recovery) in case the client cannot utilize all of the remaining TXOP. In this case, the AP can reallocate the TXOP for the same purpose or use it for any new arrived latency-sensitive traffic. The MU option can utilize the AP to specify a common duration and for the clients to pad their LL transmissions up to the common duration, in order to avoid misaligned transmissions. The non-TXOP device can indicate presence of LL traffic either for the AP or for its peer and the AP's sharing of resources can be in accordance with that. The AP can use PIFS based recovery of its TXOP for any of the above schemes if the clients do not have sufficient LL traffic to utilize (e.g., fully or partially) the TXOP shared by the AP.

In one configuration, the AP can be configured as the TXOP holder device 305 and the AP has more data to send or schedule in its TXOP. However, the TXOP holder can determine that it is ok to pause to allow latency-sensitive traffic from other clients in its BSS. The AP when it schedules MU-BA, can also include dedicated allocation for LL traffic indication in a UORA manner so that subsequently, it can cede the TXOP. The AP can cede the TXOP by scheduling those specific clients which indicated the presence of LL traffic. The AP can cede the TXOP by indicating that it is going to pause transmission in this TXOP so that potential transmitters of LL traffic take over after SIFS gap. The AP can use this option when it receives LL traffic indication from a small number of clients as the probability of collision may be low. The client can indicate presence of LL traffic either for the AP or for its peer and the AP's sharing of resources can be in accordance with that.

In some configurations, TXOP holder device 305 can include non-AP devices, such as STAs. In such configurations, a client device can be unable to receive DL data due to hidden nodes and may either have no more UL data to send or may not intend to transmit any more UL data in the TXOP. The client may be unable to receive DL data as the AP may not have knowledge of the activity durations of a hidden node which prevent the client from responding with clear to send (CTS) or acknowledgement (ACK). The client may be aware of this hidden node activity. The client can acquire TXOP and hand it to the AP to transmit DL data to it.

In some configurations, the client may have no more UL data to send in the TXOP and may determine to share the remainder of the TXOP. The client can indicate that it has finished transmitting along with the access category of gaining the TXOP and the remaining duration in the TXOP. How to utilize the remainder can be determined by the AP or client policy. For instance, the remainder can be used only for transmissions to the particular client who shared the TXOP. For instance, the remainder can be used for latency-sensitive and control traffic to other clients. For example, the remainder can be used for any traffic with priority equal to or higher than the indicated access category (AC) but up to a threshold duration.

In some configurations of the non-AP TXOP holder, the client may have no more data to send in the TXOP but can pause to allow latency-sensitive traffic from other devices in the BSS. Similar to the case where the AP is the TXOP holder, the client can allow an opportunity for LL traffic indication from the AP or even from other clients in the BSS. The LL traffic indication transmission by any of those devices can be based on a random probability such that whoever wins, transmits the LL indication. The opportunity for non-TXOP responders can be as an RU in frequency division multiplexing (FDM) with the BA sent by the AP or as a time slot immediately after BA. The LL traffic indication sought from the TXOP responder(s) can be implemented by overloading the reserved bits in the BA. Based on it, the client can pause its transmission. For instance, other devices can take over based on a random probability. For example, the AP can take over and schedule other clients. The AP may not have detected the other clients which transmitted LL traffic indication during its own BA transmission. So, the client which relinquishes its TXOP can include this information while doing so.

In some configurations, the non-AP device that is configured as TXOP holder can include the client having P2P traffic to send and wanting to utilize the remaining TXOP for that instead of ceding it for LL transmission by the AP or other in-BSS devices. In this case, the client can send an indication to the AP that it will be using the remaining TXOP for P2P exchange. This approach can be more efficient than here a client may need to send PM=1 to its AP, start a fresh EDCA process to win the channel and then communicate over the P2P link.

In some configuration, low latency traffic indication can be done in various ways. For instance, a general LL indication can include a bit of a transmission (e.g., of a BA) to indicate the presence/absence of LL traffic. In some scenarios, the LL traffic may be not associated with a correspondingly high access priority class such as AC_VO or AC_VI. However, the LL traffic indication can specify the access priority class(s) of the traffic that can use such a shared TXOP. In case random resources are allocated, the identity of the device with LL traffic can also utilize a part of the indication. The LL traffic can be intended for the TXOP holder or for another client or peer.

The traffic can be marked as low latency in various ways. As enhanced schemes to improve the performance of latency-sensitive traffic get defined, this may also warrant appropriate marking of traffic as latency sensitive. For the purpose of some techniques, the traffic can be appropriately marked as latency-sensitive before it utilizes these schemes. The user priority and access category of flows may be not concordant with the latency requirement of the traffic. The voice packets may use user priority resulting AC_BE and it is also possible for rogue applications/users to mark low priority best effort traffic as AC_VO. The SCS parameters and the QoS characteristics element values can be used to determine the latency tolerance and flow rate of a flow and accordingly mark it as latency-sensitive irrespective of the user priority or access category.

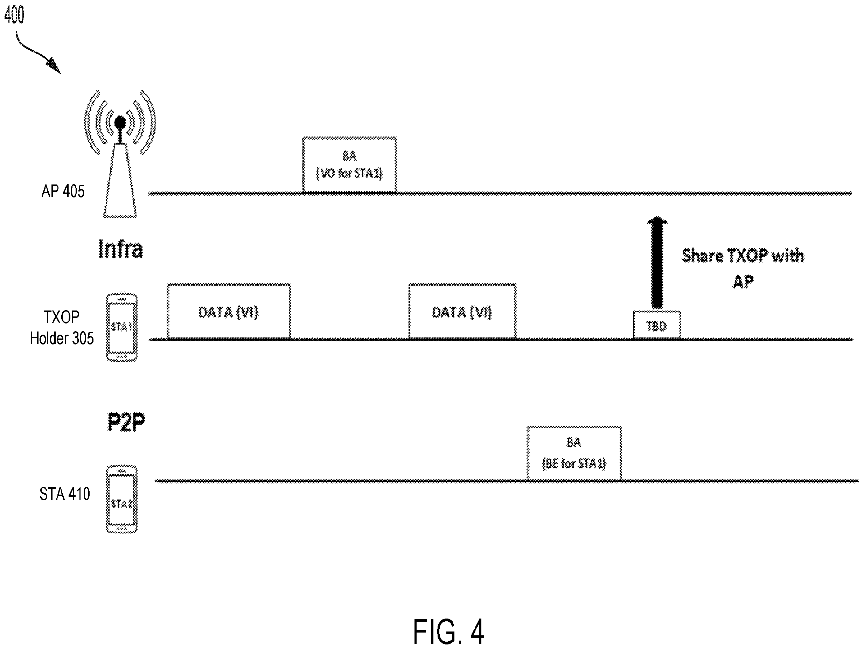

FIG. 4 illustrates an example 400 in which an access point (AP) 405 a TXOP holder device 305 and a STA (e.g., client or station device) 410 are engaged in sharing of TXOP 310. Example 400 illustrates a sequence of communication events in a WLAN 302 involving an Access Point (AP) 405, a TXOP holder device 305 (e.g., first station, STA1) and a second STA 410 (e.g., a second station, a P2P device). The timeline for each device shows the TXOP holder device 305 initially transmitting data labeled "Data (VI)" (e.g., video data) on its line, followed by the AP 405 responding with a Block Acknowledgment "BA (VO for STA1)" (e.g., voice data for STA 1 or TXOP holder device 305) on its line. TXOP holder device 305 can then transmit another "Data (VI)" frame (e.g., video data), after which STA 410 (e.g., STA2) can respond with a block acknowledgement "BA (BE for STA1)" indicating a best effort traffic category for STA1. Finally, STA1's timeline shows a "TBD" event with an arrow to the AP's line, indicating that STA1 shares the remaining TXOP with the AP. This sequence demonstrates how STA1, as the TXOP holder, manages data transmissions and coordinates with the AP and STA2 to optimize the use of the transmission opportunity.

Technical solutions can include allowing the TXOP holder to decide whether to explicitly share the TXOP. TXOP sharing can be enabled between AP and non-AP STAs in both directions, as well as between IBSS STAs and P2P STAs. To facilitate this, a mechanism can be provided for STAs to indicate their interest in acquiring the shared TXOP, potentially by embedding information in Block-ACK frames.

TXOP sharing in UHR can be enhanced by embedding information in Block-ACK to help the TXOP holder make more informed sharing decisions. Proposed information in Block-ACK could include, potentially using reserved bits of the BA Control field, details such as the highest priority AC pending for transmission and whether the traffic is intended for the STA receiving the BA or for another STA.

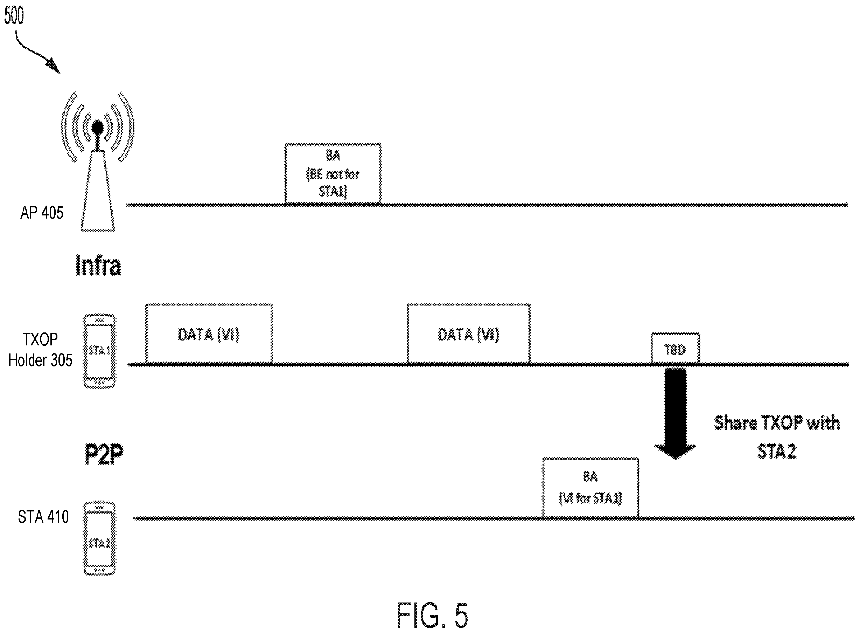

FIG. 5 illustrates an example 500 in which an access point (AP) 405 a TXOP holder device 305 and a STA (e.g., client or station device) 410 are engaged in sharing of TXOP 310. Example 500 represents a sequence of data transmissions and acknowledgments involving three devices: an AP 405, a TXOP holder device 305 and a STA 410. Each device has its timeline, illustrating the sequence of communication events. The first event occurs on TXOP holder device 305 (e.g., STA1) timeline, where it transmits "Data (VI)"-indicating a video transmission. Following this, on the AP 405 timeline, there is a box labeled "BA (BE not for STA1)," indicating that the AP 405 sends a Block Acknowledgment (BA) for Best Effort (BE) traffic, not intended for STA1. The next event on TXOP holder 305 (e.g., STA1) timeline is another "Data (VI)" transmission, showing a continuation of video data transmission. Following this, STA2 can respond with "BA (VI for STA1)," acknowledging the video data (VI) received from STA1. Finally, on STA1's timeline, there is a box labeled "TBD," with an arrow pointing downward to STA2's timeline, indicating that STA1 is sharing its Transmission Opportunity (TXOP) with STA2, allowing the AP to communicate with STA2 within the same TXOP period.

Some configurations can include a scheme that can utilize the benefits of Defer Signal (DS) based distributed access enhancements. The TXOP holder, which can be a UHR AP or a UHR non-AP, can transmit at the end of its frame exchange in a TXOP, a special trigger frame to allow the transmissions by owners of LL traffic within a special contention period immediately following (e.g., after SIFS from) the special trigger. A UHR non-AP may be able to transmit this special trigger frame provided it is authorized by its UHR AP to do so. The special trigger frame can identify which owners of LL traffic are allowed to transmit in the special contention period following the special trigger: e.g., by limiting to in-BSS devices, by allowing OBSS devices, by advertising one of different predetermined groups of devices as being allowed.

In some cases, the above special trigger frame may be transmitted by an AP after a short gap G = SIFS+N* slots from the end of an UL TXOP that was initiated by a non-AP (the non-AP could be UHR or pre-UHR/legacy from within its BSS). In such instances, N could be predetermined (zero or non-zero) or chosen such that N <= N_MAX where N_MAX could be predetermined. The choice can be pre-determined either in the standard, or as a configuration parameter for the network (which may be advertised to all devices).

The technical solutions can include improvements to distributed access. For instance, this special trigger frame can explicitly reserve the medium for the special contention period, by setting NAV, for SIFS + x (e.g., one or more) slots from the end of the trigger frame. If the special trigger frame reserves x slots, candidate LL traffic owners can count down a random number K between 0 and x-1 and transmit the LL packet directly SIFS+K*slots, without needing to transmit the DS.

In some configurations, the special trigger frame may not reserve the medium for any additional duration, and candidate LL traffic owners transmit DS (using this trigger frame for alignment) either SIFS or PIFS after the end of trigger frame. The special trigger frame may serve the purpose of time and frequency alignment including the corrections to various frequency offsets for the transmission of DS. This can alleviate the concern that the DS may not be otherwise detected properly by other devices. The DS can be a CTS2SELF message with a predetermined duration value (e.g., EIFS). Following the transmission of the DS i.e. from the end of it, devices which have transmitted DS can count down for a random number of slots (e.g., between 0 to 7) and transmit the LL packet.

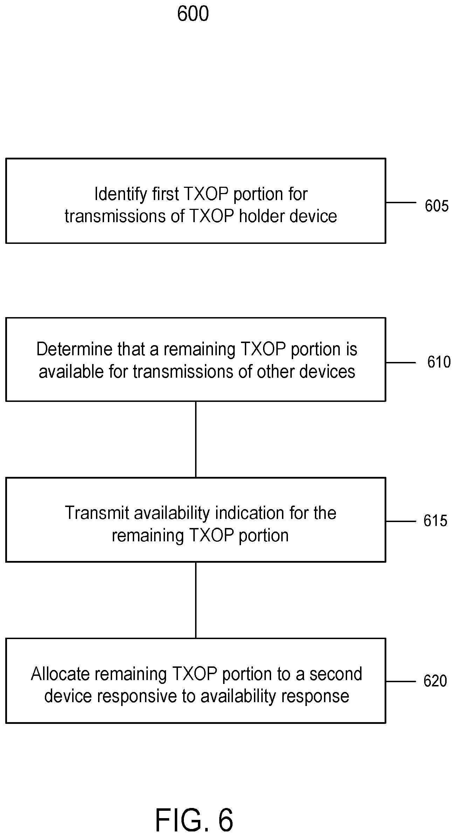

FIG. 6 illustrates an example method 600 of providing a transmission opportunity (TXOP) sharing for latency sensitive traffic of non-TXOP holder devices within a TXOP granted to a TXOP holder device. Method 600 can be implemented, using for example, systems 100-300 of FIGs. 1-3, or any of the features discussed in connection with FIGS. 1-5. Method 600 can include acts 605-620. At 605, the method can include identifying a first TXOP portion for transmissions of TXOP holder device. At 610, the method can include determining that a remaining TXOP portion is available for transmissions of other devices. At 615, the method can include transmitting availability indication for the remaining TXOP portion. At 620, the method can include allocating remaining TXOP portion to a second device responsive to the availability response.

At 605, the method can include identifying a first transmission opportunity (TXOP) portion for transmissions of a TXOP holder device. The method can include a first device (e.g., a TXOP holder device), configured to identify a first portion of a TXOP period, for one or more transmissions of the first device transmitted, or to be transmitted, over a wireless local area network (WLAN). The first device can be a TXOP holder network device of the WLAN that is granted a TXOP for sending transmissions to other (e.g., non-TXOP devices) over the WLAN, during the designated, assigned or granted TXOP period (e.g., time period of the TXOP).

In some implementations, the first device can determine to assign, grant or schedule the first portion of the TXOP period to another (e.g., a second device). The first device can determine that the first device does not include data ready for immediate transmission within the first portion of the TXOP period. For instance, the first device can identify that the data to be transmitted by the first device is old, stale or is to be refreshed. The first device can determine that the first portion of the TXOP period is to be not fully utilized by the first device given the data of the first device for transmission. In response to such a determination, the first device can assign the first portion of the TXOP holder to a second device, assigning, granting or scheduling the second portion that follows the first portion of the TXOP period, to the first device for transmissions of the first device.

The first device can be a TXOP holder device and can include a WLAN access point (AP) device, such as a Wi-Fi router. The first device can communicate to other (e.g., non-TXOP devices), such as a second device, which can include a station (e.g., STA) or any other client device (e.g., a smartphone, tablet or computer device in communication with the WLAN AP). The second device can be associated with, or in wireless communication with, the TXOP holder device (e.g., WLAN AP device or the first device). In some implementations, the first device can be or include a STA or a client device (e.g., a smartphone, tablet or a computer) that is a TXOP holder device and that is communicatively coupled with a second device, which can be or include a WLAN AP device (e.g., Wi-Fi router device), which is a non-TXOP device.

The first device (e.g., the TXOP holder device) can schedule communication. For instance, the first device can schedule a transmission of data of the first device during the first portion of the TXOP period. The TXOP holder device can schedule one or more transmissions from the first device to one or more non-TXOP devices over the course of one or more TXOP portions of one or more TXOP periods. The TXOP holder device can schedule and execute one or more transmissions from the TXOP holder device or to the TXOP holder device, over the course of the TXOP that is granted to the TXOP holder device. The one or more transmissions can be implemented responsive to the TXOP holder device prioritizing low latency transmissions (e.g., high priority data) over other data. The one or more transmissions can be low latency or high priority data or transmissions.

At 610, the method can determine that a remaining TXOP portion is available for transmissions of other devices. For example, the method can include determining that a remaining portion of the TXOP period subsequent to the first portion (e.g., in which the TXOP holder device transmitted its own transmissions) is available for data transmissions of one or more other devices of the WLAN. The one or more other devices can be the non-TXOP holder devices of the WLAN, such as other Wi-Fi APs, STAs or clients on the WLAN that are not designed TXOP holder devices for the given TXOP. The remaining portion of the TXOP period can include one or more TXOP portions which can be used for one or more transmissions by the non-TXOP devices.

The method can include determining, responsive to a determination that the scheduled transmission occupying the first portion of the TXOP period is to be completed prior to a start of the remaining portion, that the remaining portion of the TXOP period is available for the one or more other devices to transmit low latency data during the remaining portion. The method can include the TXOP holder device identifying that a first data of the one or more transmissions of the first device is of a first priority. The TXOP holder device can identify that a second data of a second one or more transmissions to be transmitted by the first device is of a second priority lower than the first priority. The TXOP holder device can determine, responsive to the second data being of the second priority, to transmit the indication of availability.

At 615, the method can include transmitting availability indication for the remaining TXOP portion. The method can include the TXOP holder device transmitting, via the WLAN, to the one or more other devices (e.g., non-TXOP device), one or more indications of availability of the remaining portion of the TXOP period for data transmissions. The TXOP holder device can determine that low latency transmissions of the TXOP holder device are completed during the first portion of the TXOP period and that the remaining portion of the TXOP period (e.g., following the first portion) can be used for low latency transmissions by non-TXOP devices. In response to such a determination, the TXOP holder device can transmit one or more availability indications to notify the non-TXOP devices that the remainder of the TXOP period will be available for high priority or low latency traffic of the non-TXOP devices.

The method can include transmitting the indication of availability to the one or more other (e.g., non-TXOP) devices via one or more physical protocol data units (PPDUs). The indication can include, for example, one or more data bits within one or more fields of the PPDUs used to indicate the availability indication. The TXOP holder device can receive, from the one or more other devices, one or more block acknowledgements (BAs) responsive to the one or more PPDUs. The one or more BAs can include one or more availability responses from the one or more non-TXOP devices. The one or more responses can indicate whether the non-TOP devices are to participate in the TXOP portion made available by the TXOP holder device. The one or more responses can be indicated using one or more bits of one or more fields of the one or more BAs. Upon receiving the one or more BAs (e.g., availability responses) responsive to the one or more PPDUs (e.g., availability indication), the TXOP holder device can select, based on the one or more bits of the one or more fields of the one or more BAs, the second device. The second device can be the non-TXOP device that will transmit its data (e.g., low latency traffic) via the TXOP portions made available by the TXOP holder device.

The method can include identifying, for a plurality of the one or more other devices, a corresponding plurality of random delays within the TXOP period. Each random delay of the plurality of random delays for each device of the one or more other (e.g., non-TXOP) devices can be different from each other random delay of the plurality of delays of each other device of the one or more other devices. For instance, a first non-TXOP device can respond to the availability indication of the TXOP holder device with a first availability response having a first response delay of a first time period delay length, while a second non-TXOP device can respond to the same availability indication with a second availability response having a second response delay of a second time period delay length that is different (e.g., longer or shorter) than the first time period length. The length of the time period delay can be unique to each non-TXOP device and can be randomly assigned to each of the device on the WLAN.

The TXOP holder device can select from the one or more other (e.g., non-TXOP) devices, the particular second device whose transmissions will be transmitted during the remaining TXOP portions, based on a respective random delay of the second device. For instance, the TXOP holder device can select a particular non-TXOP device, based on a plurality of response delays of a plurality availability responses from the plurality of non-TXOP devices. The particular non-TXOP device can be selected based on the availability response identifying the non-TXOP device indicating having low latency traffic to send during the TXOP portion. The availability response identifying the low-latency traffic from the particular non-TOXP device can be received before other availability responses are received by the TXOP holder device. For instance, the second device can be selected based on the response delay of the availability response of the second device being the earliest affirmative response received responsive to the availability indication.

The TXOP holder device can allocate the remaining portion of the TXOP period to the second device in response to the selection. Each of the plurality of random delays can correspond to a timing for transmitting a respective response of the one or more responses by a respective device of the one or more other devices. The selection of the second device can be based on a respective timing of the random delay of the second device such that the response from the second device is received by the first device before other respective responses of other respective remaining devices.

At 620, the method can include allocating remaining TXOP portion to a second device responsive to the availability response. The method can include allocating, responsive to one or more responses to the indication from the one or more other devices, the remaining portion of the TXOP period to a second device of the one or more other devices to transmit data of the second device during the remaining portion of the TXOP period. The TXOP holder device can receive the one or more availability responses to the availability indication and can identify, from the plurality or responses, those responses that indicate presence of low latency traffic that can be transmitted by the non-TXOP devices. The TXOP holder device can select from the identified responses indicating the low latency traffic, those responses that have arrived first, or those that have the largest amount of low latency traffic to transmit.

The TXOP holder device can select, from the one or more other devices, the second device based on a respective random delay of the second device. The TXOP holder device can allocate the remaining portion of the TXOP period to the second device in response to the selection. The TXOP holder device can select, from the one or more other devices, the second device based on the amount of low latency or high priority network traffic indicated by the response to be transmitted by the non-TXOP device.

The TXOP holder device can determine, based on a response of the one or more responses of the second device, that the data of the second device is low latency data. The TXOP holder device can allocate, responsive to the data of the second device being low latency data, the remaining portion to the second device. The first device (e.g., the TXOP holder device) can be configured to schedule, for the second device, a transmission of the data of the second device that is low latency data. Such a transmission can be scheduled for at least a first part of the remaining portion of the TXOP period. The first device can be configured to schedule, for a third device of the one or more other devices of the WLAN, a transmission of a data of the third device that is low latency data for at least a second part of the remaining portion of the TXOP period. The second part of the TXOP period can be a TXOP portion that is following the first part of the TXOP period during which the second device transmitted its low latency traffic.

The TXOP holder device can determine that the second device has completed a transmission of the data of the second device during a first part of the remaining portion of the TXOP period. The TXOP holder device can determine to transmit a second one or more transmissions of the first device over the WLAN during a second part of the remaining portion of the TXOP period, the second part following the first part. The TXOP holder device can identify uplink data of the first device to transmit to the second device and determine, based on the uplink data, to allocate the remaining portion of the TXOP period to the second device for the second device to transmit downlink data to the first device. The first device can be configured to determine to allocate the remaining portion of the TXOP period to the second device based on an amount of the uplink data satisfying a threshold. The threshold can be a threshold amount of uplink data. The first device can include a first client device associated with a WLAN access point (AP) device and the second device can include a second client device associated with the WLAN AP device. The first device can be configured to allocate the remaining portion of the TXOP period to the second device for peer to peer communications (e.g., Bluetooth communications).

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system (300) comprising:
a first device (305) of a wireless network (302) granted a transmission opportunity, TXOP, (310) for transmissions during a TXOP period (312), the first device (305) configured to:
identify a first portion (314) of the TXOP period (312) for one or more transmissions of the first device (305) over the wireless network (302);
determine that a remaining portion (314) of the TXOP period (312) subsequent to the first portion (314) is available for data transmissions of one or more other devices (305A) of the wireless network (302);
transmit, via the wireless network (302), to the one or more other devices (305A), an indication of availability of the remaining portion (314) of the TXOP period (312) for data transmissions; and
allocate, responsive to one or more responses to the indication from the one or more other devices (305A), the remaining portion (314) of the TXOP period (312) to a second device (305A) of the one or more other devices (305A) to transmit data of the second device (305A) during the remaining portion (314) of the TXOP period (312).

2. The system (300) of claim 1, wherein the first device (305) is further configured to:
schedule a transmission of data of the first device (305) during the first portion (314) of the TXOP period (312); and
determine, responsive to a determination that the scheduled transmission occupying the first portion (314) of the TXOP period (312) is to be completed prior to a start of the remaining portion (314), that the remaining portion (314) of the TXOP period (312) is available for the one or more other devices (305A) to transmit low latency data during the remaining portion (314).

3. The system (300) of claim 1 or 2, comprising at least one of the following features:
i) wherein the first device (305) is further configured to:
determine, based on a response of the one or more responses of the second device (305A), that the data of the second device (305A) is low latency data; and
allocate, responsive to the data of the second device (305A) being low latency data, the remaining portion (314) to the second device (305A);
ii) wherein the first device (305) is further configured to:
identify that a first data of the one or more transmissions of the first device (305) is of a first priority;
identify that a second data of a second one or more transmissions to be transmitted by the first device (305) is of a second priority lower than the first priority; and
determine, responsive to the second data being of the second priority, to transmit the indication of availability.

4. The system (300) of any of claims 1 to 3, wherein the first device (305) is further configured to schedule, for the second device (305A), a transmission of the data of the second device (305A) that is low latency data, for at least a first part of the remaining portion (314) of the TXOP period (312).

5. The system (300) of claim 4, wherein the first device (305) is further configured to schedule, for a third device of the one or more other devices (305A) of the wireless network (302), a transmission of a data of the third device that is low latency data for at least a second part of the remaining portion (314) of the TXOP period (312), the second part following the first part.

6. The system (300) of any of claims 1 to 5, wherein the first device (305) is further configured to:
transmit the indication to the one or more other devices (305A) via one or more physical protocol data units, PPDUs;
receive, from the one or more other devices (305A), one or more block acknowledgements, Bas, responsive to the one or more PPDUs, the one or more BAs comprising the one or more responses indicated using one or more bits of one or more fields of the one or more BAs; and
select, based on the one or more bits of the one or more fields of the one or more BAs, the second device (305A).

7. The system (300) of any of claims 1 to 6, wherein the first device (305) is further configured to:
identify, for a plurality of the one or more other devices (305A), a corresponding plurality of random delays within the TXOP period (312), each random delay of the plurality of random delays for each device of the one or more other devices (305A) different from each other random delay of the plurality of delays of each other device (305A) of the one or more other devices (305A);
select, from the one or more other devices (305A), the second device (305A) based on a respective random delay of the second device (305A); and
allocate the remaining portion (314) of the TXOP period (312) to the second device (305A) in response to the selection.

8. The system (300) of claim 7, wherein each of the plurality of random delays corresponds to a timing for transmitting a respective response of the one or more responses by a respective device of the one or more other devices (305A), and wherein the selection of the second device (305A) is based on a respective timing of the random delay of the second device (305A) such that the response from the second device (305A) is received by the first device (305) before other respective responses of other respective remaining devices.

9. The system (300) of any of claims 1 to 8, comprising at least one of the following features:
i) wherein the first device (305) is further configured to:
determine that the second device (305A) has completed a transmission of the data of the second device (305A) during a first part of the remaining portion (314) of the TXOP period (312); and
determine to transmit a second one or more transmissions of the first device (305) over the wireless network (302) during a second part of the remaining portion (314) of the TXOP period (312), the second part following the first part;
ii) wherein the first device (305) comprises a wireless local area network, WLAN, (302) access point, AP, (405) device and the second device (305A) comprises a client device associated with the WLAN AP device.

10. The system (300) of any of claims 1 to 9, wherein the first device (305) comprises a client device of a wireless local area network, WLAN, (302) access point, AP, (405) device and the second device (305A) comprises the WLAN AP device, and wherein the first device (305) is further configured to:
identify uplink data of the first device (305) to transmit to the second device (305A); and
determine, based on the uplink data, to allocate the remaining portion (314) of the TXOP period (312) to the second device (305A) for the second device (305A) to transmit downlink data to the first device (305).

11. The system (300) of claim 10, wherein the first device (305) is configured to determine to allocate the remaining portion (314) of the TXOP period (312) to the second device (305A) based on an amount of the uplink data satisfying a threshold.

12. The system (300) of any of claims 1 to 11, wherein the first device (305) comprises a first client device associated with a wireless local area network, WLAN, (302) access point, AP, (405) device and the second device (305A) comprises a second client device associated with the WLAN AP device and wherein the first device (305) is further configured to allocate the remaining portion (314) of the TXOP period (312) to the second device (305A) for peer to peer communications.

13. A method, comprising:
identifying, by a first device (305) of a wireless local area network, WLAN, (302) granted a transmission opportunity, TXOP, (310) for transmissions during a TXOP period (312), a first portion (314) of the TXOP period (312) for one or more transmissions of the first device (305) over the WLAN;
determining, by the first device (305), that a remaining portion (314) of the TXOP period (312) subsequent to the first portion (314) is available for data transmissions of one or more other devices (305A) of the WLAN;
transmitting, by the first device (305), via the WLAN, to the one or more other devices (305A), an indication of availability of the remaining portion (314) of the TXOP period (312) for data transmissions; and
allocating, by the first device (305), responsive to one or more responses to the indication from the one or more other devices (305A), the remaining portion (314) of the TXOP period (312) to a second device (305A) of the one or more other devices (305A) to transmit data of the second device (305A) during the remaining portion (314) of the TXOP period (312).

14. The method of claim 13, comprising at least one of the following features:
i) comprising:
scheduling, by the first device (305), a transmission of data of the first device (305) during the first portion (314) of the TXOP period (312); and
determining, by the first device (305), responsive to a determination that the scheduled transmission occupying the first portion (314) of the TXOP period (312) is to be completed prior to a start of the remaining portion (314), that the remaining portion (314) of the TXOP period (312) is available for the one or more other devices (305A) to transmit low latency data during the remaining portion (314);
ii) comprising:
determining, by the first device (305), based on a response of the one or more responses of the second device (305A), that the data of the second device (305A) is low latency data; and
allocating, by the first device (305), responsive to the data of the second device (305A) being low latency data, the remaining portion (314) to the second device (305A);
iii) comprising:
identifying, by the first device (305), that a first data of the one or more transmissions of the first device (305) is of a first priority;
identifying, by the first device (305), that a second data of a second one or more transmissions to be transmitted by the first device (305) is of a second priority lower than the first priority; and
determining, by the first device (305), responsive to the second data being of the second priority, to transmit the indication of availability;
iv) comprising scheduling, for the second device (305A), a transmission of the data of the second device (305A) that is low latency data, for at least a first part of the remaining portion (314) of the TXOP period (312).

15. A non-transitory computer-readable medium storing instructions that, when executed by at least one processor of a first device (305) a wireless local area network, WLAN, (302) that is granted a transmission opportunity, TXOP, (310) for transmissions during a TXOP period (312), cause the at least one processor to:
identify a first portion (314) of the TXOP period (312) for one or more transmissions of the first device (305) over the WLAN;
determine that a remaining portion (314) of the TXOP period (312) subsequent to the first portion (314) is available for data transmissions of one or more other devices (305A) of the WLAN;
transmit, via the WLAN, to the one or more other devices (305A), an indication of availability of the remaining portion (314) of the TXOP period (312) for data transmissions; and
allocate, responsive to one or more responses to the indication from the one or more other devices (305A), the remaining portion (314) of the TXOP period (312) to a second device (305A) of the one or more other devices (305A) to transmit data of the second device (305A) during the remaining portion (314) of the TXOP period (312).
